# EUROPEAN PATENT SPECIFICATION

(11) **EP 4 529 347 B1**
(45) Date of publication and mention of the grant of the patent: **28.10.2026**
(21) Application number: 25156101.5
(22) Date of filing: 23.04.2021
(51) Int. Cl.: H04W 28/08, H04W 28/086, H04W 52/02, H04W 84/12

(54) **METHODS AND DEVICES FOR RESTRICTED TARGET WAKE TIME OPERATION FOR LATENCY SENSITIVE TRAFFIC IN WIRELESS LOCAL AREA NETWORKS**
VERFAHREN UND VORRICHTUNGEN FÜR EINGESCHRÄNKTEN ZIELWECKZEITBETRIEB FÜR LATENZEMPFINDLICHEN VERKEHR IN DRAHTLOSEN LOKALEN NETZWERKEN
PROCÉDÉS ET DISPOSITIFS POUR UNE OPÉRATION DE TEMPS DE RÉVEIL CIBLE RESTREINT POUR UN TRAFIC SENSIBLE À LA LATENCE DANS DES RÉSEAUX LOCAUX SANS FIL

(43) Date of publication of application: 26.03.2025
(60) Divisional application: 26195753.4 / 4 811 928
(62) Document number(s) of the earlier application(s) in accordance with Art. 76 EPC: 21937381.8 / 4 285 636
(73) Proprietor: GUANGDONG OPPO MOBILE TELECOMMUNICATIONS CORP., LTD., Dongguan, Guangdong 523860 (CN)
(72) Inventor: LU, Liuming, Dongguan, 523860 (CN); HUANG, Lei, 049483 Singapore (SG); LUO, Chaoming, Dongguan, 523860 (CN); ZHOU, Pei, Dongguan, 523860 (CN)
(74) Representative: Aldridge, Henry Alexander

(56) References cited:
- "35. Extremely high throughput (EHT) MAC specification 35.1 Introduction", vol. 802.11be drafts, no. D0.4, 5 April 2021 (2021-04-05), pages 1 - 54, XP068178618, Retrieved from the Internet <URL:http://www.ieee802.org/11/private/Draft_Standards/11be/Draft%20P802.11be_D0.4%20-%20RTF.zip>
- DUNCAN HO (QUALCOMM): "Low Latency Enhancements", vol. 802.11 EHT; 802.11be, no. 1, 27 August 2020 (2020-08-27), pages 1 - 11, XP068172327, Retrieved from the Internet <URL:https://mentor.ieee.org/802.11/dcn/20/11-20-0163-01-00be-low-latency-enhancements.pptx>
- LIWEN CHU (NXP): "Low Latency Support", vol. 802.11 EHT; 802.11be, no. 1, 14 October 2020 (2020-10-14), pages 1 - 10, XP068173794, Retrieved from the Internet <URL:https://mentor.ieee.org/802.11/dcn/20/11-20-1058-01-00be-low-latency-support.pptx>

## Description

This is a divisional application of EP Patent Application No. 21937381.8, filed on April 23, 2021, and entitled "METHODS AND DEVICES FOR RESTRICTED TARGET WAKE TIME OPERATION FOR LATENCY SENSITIVE TRAFFIC IN WIRELESS LOCAL AREA NETWORKS".

### Field of Invention

The invention relates to target wake time (TWT) mechanism in wireless communications, and more particularly to methods and devices for restricted TWT (R-TWT) operation for latency sensitive traffic in a wireless local area network (WLAN).

### Background

TWT mechanism was initially designed to manage activities in the basic service set (BSS) by scheduling stations (STAs) to reduce wake time of STAs required for power management. Institute of Electrical and Electronics Engineers (IEEE) 802.11 be introduces the R-TWT operation which provides more predictable latency with higher reliability for latency sensitive traffic based on the TWT mechanism. Typically, the R-TWT mechanism is used for a protected transmission of latency sensitive traffic. Each latency sensitive traffic has a corresponding traffic identifier (TID).

Furthermore, 802.11be also defines a directional-based TID-to-link mapping mechanism among multiple links set up between an access point (AP) multi-link device (MLD) including a plurality of APs, and a non-AP MLD including a plurality of non-AP STAs. After the multiple links between the AP MLD and non-AP MLD are successfully set up, the TID-to-link mapping may be updated through a negotiation between the AP MLD and the non-AP MLD when necessary.

However, the existing 802.11be has not defined a mechanism for the R-TWT operation in collaboration with the TID-to-link mapping. This may cause inconsistencies between the R-TWT Operation and a scenario formed by the TID-to-link mapping.

It would therefore be desirable to provide an effective mechanism for collaboration of the R-TWT operation for latency sensitive traffic and the TID-to-Link mapping in a WLAN, especially in IEEE 802.11be EHT WLAN. Related technologies are known from IEEE DRAFT, "35. Extremely high throughput (EHT) MAC specification 35.1 Introduction"; DUNCAN HO (QUALCOMM): "Low Latency Enhancement", IEEE DRAFT; and LlWEN CHU (NXP): "Low Latency Support", IEEE DRAFT.

### Summary of Invention

Embodiments of the invention provide methods and devices for R-TWT operation for latency sensitive traffic in a WLAN. With the methods and devices proposed in various embodiments of the invention, the R-TWT operation may effectively cooperate with the TID-to-Link mapping to avoid any possible inconsistent scenarios. The invention is set out in the appended set of claims.

### Brief Description of the Drawings

The invention will be described in detail with reference to the accompanying drawings, in which:
Figure 1 is a flowchart illustrating a first method for R-TWT operation for latency sensitive traffic in a WLAN carried out by a first AP according to various embodiments of the invention.
Figure 2 is a flowchart illustrating a second method for R-TWT operation for latency sensitive traffic in a WLAN carried out by the first non-AP STA according to various embodiments of the invention.
Figure 3A is a schematic diagram illustrating a method for R-TWT operation for latency sensitive traffic in a WLAN according to a first embodiment of the invention.
Figure 3B is a block diagram illustrating a format of the R-TWT element.
Figure 4 is a schematic diagram illustrating a method for R-TWT operation for latency sensitive traffic in a WLAN according to a second embodiment of the invention.
Figure 5 is a schematic diagram illustrating a method for R-TWT operation for latency sensitive traffic in a WLAN according to a third embodiment of the invention.
Figure 6 is a schematic diagram illustrating a method for R-TWT operation for latency sensitive traffic in a WLAN according to a fourth embodiment of the invention.
Figure 7A is a block diagram illustrating a first format of a Broadcast R-TWT Parameter Set field of an R-TWT element with TID-to-Link mapping information.
Figure 7B is a block diagram illustrating a second format of a Broadcast R-TWT Parameter Set field of an R-TWT element with TID-to-Link mapping information.
Figure 7C is a block diagram illustrating a third format of a Broadcast R-TWT Parameter Set field of an R-TWT element with TID-to-Link mapping information.
Figure 8A is a schematic diagram illustrating an R-TWT operation with quiet elements after the R-TWT agreements have been set up on a plurality of links.
Figure 8B is a schematic diagram illustrating an R-TWT operation with TID-to-Link Mapping element indicating suspended R-TWT operation mode after the R-TWT agreements have been set up on a plurality of links.
Figure 8C is a schematic diagram illustrating an R-TWT operation with TID-to-Link Mapping element indicating terminated R-TWT operation mode after the R-TWT agreements have been set up on a plurality of links.
Figure 9 is a block diagram illustrating a format of a TID-to-Link mapping element with R-TWT information of TID x field.
Figure 10 is a schematic diagram illustrating an AP according to some embodiments of the invention.
Figure 11 is a schematic diagram illustrating an STA according to some embodiments of the invention.

### Detailed Description of Embodiments of the Invention

In the following description, numerous specific details are set forth in order to provide a thorough understanding of various illustrative embodiments of the invention. It is understood that the terminology used herein is for the purpose of describing particular embodiments only and is not intended to limit the scope of the invention.

Embodiments described in the context of one of the methods or devices are analogously valid for the other methods or devices. Similarly, embodiments described in the context of a method are analogously valid for a device, and vice versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

As used herein, the articles "a", "an" and "the" as used with regard to a feature or element include a reference to one or more of the features or elements. As used herein, the term "and/or" includes any and all combinations of one or more of the associated listed items. As used herein, the terms "first," "second," and "third," etc. are used merely as labels and are not intended to impose numerical requirements on their objects. As used herein, the term "configured to" is interchangeable with "operative" or "adapted to".

Various embodiments of the invention provide a mechanism for coordinating R-TWT agreement setup process and R-TWT operation with TID-to-Link mapping in a WLAN. The R-TWT operation is provided to allow an AP to use enhanced medium access protection and resource reservation mechanisms to provide more predictable latency and reduce worst case latency and/or jitter so that the AP has higher reliability for latency sensitive traffic. The TID-to-Link mapping is a directional-based TID-to-Link mapping mechanism among a plurality of links set up between an AP MLD which includes a plurality of APs and a non-AP MLD which includes a plurality of non-AP STAs. Each TID is used by higher layer entities to distinguish medium access control (MAC) service data units (MSDUs) to MAC entities that support quality of service (QoS) within the MAC data service.

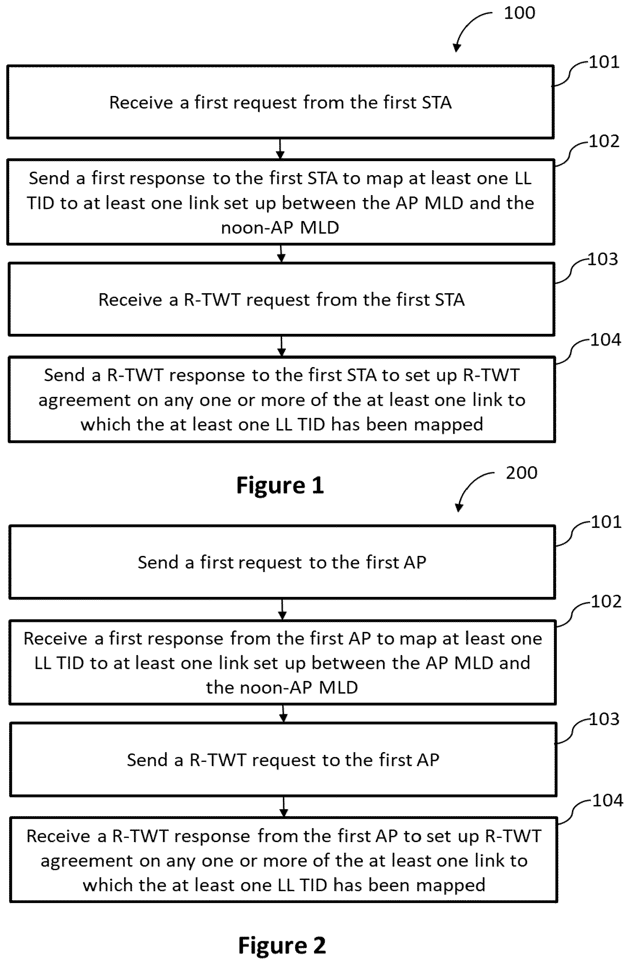

Figure 1 is a flowchart illustrating a first method 100 for R-TWT operation for latency sensitive traffic in a WLAN carried out by a first AP according to various embodiments of the invention. The first AP is an AP in an AP MLD which includes a plurality of APs, and a link may be set up between the first AP and a first non-AP STA in a non-AP MLD which includes a plurality of non-AP STAs.

At **Block** 101, a first request from the first STA is received by the first AP.

At **Block** 102, a first response is sent by the first AP to the first STA to map at least one TID for latency sensitive traffic to at least one link set up between the AP MLD and a non-AP MLD, wherein the AP MLD comprises a plurality of APs and the non-AP MLD comprises a plurality of non-AP STAs.

In embodiments of the invention, the TID for latency sensitive traffic is also referred to as LL TID.

At **Block** 103, a R-TWT request from the first STA is received by the first AP.

At **Block** 104, a R-TWT response is sent to the first STA by the first AP to set up R-TWT agreement on any one or more of the at least one link to which the at least one LL TID has been mapped.

Although in the first method 100, the first AP sends the first response upon receipt of the first request from the first STA, it should be noted that in some embodiments, the first AP may send an unsolicited first response without receiving the first request to map at least one TID for latency sensitive traffic to at least one link set up between the AP MLD and a non-AP MLD. Further, in the first method 100, the R-TWT agreement is set up by the two steps in block 103 and block 104. However, it should be note that in other embodiments, the R-TWT agreement on any one or more of the at least one link to which the at least one LL TID has been mapped may be set up by an unsolicited R-TWT response from the first AP to the first STA. That is to say, the first AP may not receive the R-TWT request from the first STA and only send an unsolicited R-TWT response to the first STA to set up R-TWT agreement on any one or more of the at least one link to which the at least one LL TID has been mapped.

Figure 2 is a flowchart illustrating a second method 200 for R-TWT operation for latency sensitive traffic in a WLAN carried out by the first non-AP STA according to various embodiments of the invention.

At **Block** 201, a first request is sent by the first STA to the first AP.

At **Block** 202, a first response from the first AP is received by the first STA to map at least one LL TID to at least one link set up between the AP MLD and a non-AP MLD, wherein the AP MLD comprises a plurality of APs and the non-AP MLD comprises a plurality of non-AP STAs.

At **Block** 203, a R-TWT request is sent by the first STA to the first AP.

At **Block** 204, a R-TWT response from the first AP is received by the first STA to set up R-TWT agreement on any one or more of the at least one link to which the at least one LL TID has been mapped.

Although in the second method 200, the first STA sends the first request to the first AP before receiving the first response from the first AP, it should be noted that in some embodiments, the first STA may not send the first request and only receive an unsolicited first response from the first AP to map at least one TID for latency sensitive traffic to at least one link set up between the AP MLD and a non-AP MLD. Further, in the second method 200, the R-TWT agreement is set up by the two steps in block 103 and block 104. However, it should be note that in other embodiments, the R-TWT agreement on any one or more of the at least one link to which the at least one LL TID has been mapped may be set up by an unsolicited R-TWT response from the first AP to the first STA. That is to say, the first STA may not send the R-TWT request and only receive an unsolicited R-TWT response from the first AP to set up R-TWT agreement on any one or more of the at least one link to which the at least one LL TID has been mapped.

### Multi-Link setup process with default TID-to-Link mapping

In some embodiments, the TID-to-Link mapping process may be a default process which is conducted during or after a multi-link setup process between the AP MLD and the non-AP MLD. In these embodiments, the first request received by the first AP may be a first Multi-link Association request from the first STA. The first response sent by the first AP may be a first Multi-link Association response which is sent to the first STA to set up a plurality of links between the APs in the AP-MLD and the STAs in the non-AP MLD and map all TIDs to all of the plurality of links set up between the AP MLD and the non-AP MLD by default, wherein all TIDs include the at least one LL TID. In these embodiments, the R-TWT agreement may be set up on any one or more of the links set up between the AP MLD and the non-AP MLD.

### Multi-Link setup process with TID-to-Link mapping negotiation

In some embodiments, the TID-to-Link mapping may be established by TID-to-Link mapping negotiation during the multi-link setup process, i.e., the negotiation may be included in the multi-link setup process. In these embodiments, the first request received by the first AP may be a second Multi-Link Association request from the first STA. The first response sent by the first AP may be a second Multi-link Association response which is sent to the first STA to set up a plurality of links between the APs in the AP-MLD and the STAs in the non-AP MLD and map at least one TID for latency sensitive traffic to a subset of the links set up between the AP-MLD and the non-AP MLD through a negotiation between the first STA and the first AP.

In these embodiments, the at least one LL TID may be mapped to a subset of the links between the AP-MLD and the non-AP MLD. Each TID may be mapped to same or different link set. In one example, the non-AP MLD may indicate during the multi-link setup process, e.g., in the second Multi-link Association request sent from the first STA to the first AP, that a same or different link set may be used for each TID. For example, the first STA may indicate in the second Multi-link Association request that a same link set is used for all TIDs, or all TIDs are mapped to all links set up between the AP MLD and the non-AP MLD.

### TID-to-Link Mapping Negotiation

In some embodiments, the TID-to-Link mapping may be updated after the multi-link setup process through a negotiation between the AP MLD and the non-AP MLD, e.g., through a negotiation between the first AP and the first STA. This negotiation may be initiated by the AP MLD or the non-AP MLD according to uplink and downlink load, link state, and/or performance. The link state may include power save state. In one embodiment, the negotiation at the first AP side may include: a TID-to-Link Mapping request from the first STA is received by the first AP, and a TID-to-Link Mapping response is sent by the first AP to the first STA to map the at least one LL TID to a link between the AP-MLD and the non-AP MLD to which the at least one LL TID has not been mapped. Accordingly, the negotiation at the first STA side may include: a TID-to-Link Mapping request is sent by the first STA to the first AP, and a TID-to-Link Mapping response from the first AP is received by the first STA to map the at least one TID for latency sensitive traffic to a link between the AP-MLD and the non-AP MLD to which the at least one LL TID has not been mapped.

It should be noted that in some embodiments of the invention, the TID-to-Link Mapping negotiation for all of the links set up between the AP MLD and the non-AP MLD may be performed through this separate TID-to-Link mapping negotiation process instead of being performed together with the multi-link setup process or being a default process without the need of negotiation.

In various embodiments, the R-TWT agreement setup process, i.e., the process of setting up R-TWT agreement on any one or more of the at least one link to which the at least one LL TID has been mapped, is conducted through a negotiation between the AP MLD and the non-AP MLD, e.g., a negotiation between the first AP and the first STA. In the negotiation process, a R-TWT request from the first STA is received by the first AP; and a first R-TWT response is sent by the first AP to the first STA to set up the R-TWT agreement on any one or more of the at least one link to which the at least one LL TID has been mapped. In one example, if there are two links between the AP MLD and the non-AP MLD, Link 1 is set up between the first AP and the first STA, and Link 2 is set up between a second AP and a second STA, the negotiation between the first AP and the first STA may be conducted to set up the R-TWT agreement on Link 1, Link 2 or both. The R-TWT agreements set up on Link 1 and Link 2 may have same or different starting time, ending time and other parameters.

In some embodiments, the R-TWT request from the first STA and/or the R-TWT response from the first AP may comprise an R-TWT element including a first subfield and a second subfield in a Control field, wherein the first subfield is set to indicate whether information included in the R-TWT element is for negotiation of parameters of R-TWT, and the second subfield is set to indicate whether the information included in the R-TWT element is applied to all links to which the at least one TID for latency sensitive traffic has been mapped.

### R-TWT setup process integrated with TID-to-Link mapping negotiation

In some embodiments, the TID-to-Link mapping process and the R-TWT setup process may be conducted together by a negotiation between the AP MLD and the non-AP MLD, e.g., a negotiation between the first AP and the first STA. The negotiation at the first AP side may include: an integrated R-TWT request from the first STA is received by the first AP, and an integrated R-TWT response is sent by the first AP to the first STA to map the at least one TID for latency sensitive traffic to at least one link between the AP-MLD and the non-AP MLD to which the at least one LL TID has not been mapped and set up the R-TWT agreement on any one or more of the at least one link to which the at least one LL TID has been mapped.

Accordingly, the negotiation at the first STA side may include: the integrated R-TWT request is sent by the first STA to the first AP, and the integrated R-TWT response from the first AP is received by the first STA to map the at least one TID for latency sensitive traffic to at least one link between the AP-MLD and the non-AP MLD to which the at least one LL TID has not been mapped and set up the R-TWT agreement on any one or more of the at least one link to which the at least one LL TID has been mapped.

It should be noted that in some embodiments, all TID-to-Link mapping negotiation between the AP MLD and the non-AP MLD may be conducted through this integrated process, or this negotiation process may only be conducted to establish TID-to-Link mapping for a specific link after the TID-to-Link mapping for multiple links between the AP MLD and the non-AP MLD have been set up during the multi-link setup process.

In some embodiments, the integrated R-TWT request may include a first R-TWT element which is set to indicate both the at least one link on which the R-TWT agreement is to be set up and the at least one link to which the at least one LL TID is to be mapped. In some embodiments, the integrated R-TWT response may include a second R-TWT element which is set to indicate the one or more link on which the R-TWT agreement has been set up and the at least one link to which the at least one LL TID has been mapped. Preferably, the R-TWT element may be included both the second R-TWT request and the second R-TWT response.

In some embodiments, the integrated R-TWT request and/or the integrated R-TWT response may be set to include at least one first R-TWT element indicating the at least one link on which the R-TWT agreement is set up, e.g., the at least one link on which the R-agreement is to be set up or has been set up, and at least one TID-to-Link mapping element indicating the at least one link to which the at least one TID for latency sensitive traffic is mapped, e.g., the link to which at least one LL TID is to be mapped or has been mapped.

Alternatively, in some embodiments, the integrated R-TWT request and/or the integrated R-TWT response may be set to include at least one second R-TWT element indicating the one or more links on which the R-TWT agreement is set up and the at least one link to which the at least one TID for latency sensitive traffic is mapped. In a first example, the second R-TWT element may comprise a Broadcast R-TWT Parameter Set field which is set to include a first subfield, e.g., a Link ID Bitmap field, indicating at least one link to which the R-TWT is applied, a second subfield, e.g., a Link Mapping of a TID for downlink direction, indicating at least one link on which frames belonging to a TID for latency sensitive traffic for downlink direction are sent, and a third subfield, e.g., a Link Mapping of a TID for uplink direction, indicating at least one link on which frames belonging to a TID for latency sensitive traffic for uplink direction are sent. In a second example, the second R-TWT element may comprise a Broadcast R-TWT Parameter Set field which is set to include a R-TWT Traffic Info field, a Link ID Bitmap field and a subfield for R-TWT in a Request Type field, e.g., an R-TWT subfield which is set to indicate whether the TWT schedule specified by the corresponding Broadcast TWT parameter Set field is a R-TWT schedule. In a third example, the second R-TWT element is same as the second example except that in the third example, the Broadcast R-TWT Parameter Set field includes two Link ID Bitmap fields, e.g., a Link ID Bitmap for UL TID field and a Link ID Bitmap for DL TID field.

### R-TWT operation after R-TWT setup process

In some embodiments, the method may further include: if no TID for latency sensitive traffic is mapped to a first link set up between the first AP and the first STA due to TID-to-Link mapping update/change, the R-TWT agreement set up on the first link is to be torn down by the first AP and the first STA. For example, the R-TWT agreement may be torn down by a termination process which includes: the first AP sends a TID-to-Link Mapping Element with a R-TWT termination mode indication on the first link to terminate the R-TWT agreement on the first link. Accordingly, the R-TWT agreement on the first link is torn down by the first STA upon receipt of the TID-to-Link Mapping Element with a R-TWT termination mode indication sent on the first link. This termination process may be performed when the AP MLD and the non-AP MLD do not support or do not enter into a suspended R-TWT operation mode.

In some embodiments, when the AP MLD and the non-AP MLD support a suspended R-TWT operation mode, the first method 100 at the first AP may further include: if no TID for latency sensitive traffic is mapped to a first link set up between the first AP and the first STA, a R-TWT SP Quiet Element or a TID-to-Link Mapping Element with a suspended R-TWT mode indication may be sent by the first AP on the first link to enter the first link into a suspended R-TWT operation mode, or a TID-to-Link Mapping Element with a R-TWT termination mode indication may be sent by the first AP on the first link to terminate the R-TWT agreement on the first link.

Accordingly, the second method 200 at the first STA may further include: when non TID for latency sensitive traffic is mapped to a first link set up between the first AP and the first STA, a R-TWT SP Quiet Element or a TID-to-Link Mapping Element with a suspended R-TWT mode indication sent by the first AP on the first link is received by the first STA and the first link is entered into a suspended R-TWT operation mode by the first STA; or the R-TWT agreement on the first link is entered into a R-TWT termination mode by the first STA upon receipt of a TID-to-Link Mapping Element with a R-TWT termination mode indication. Preferably, the first method 100 and the second method 200 may further include: when the first link enters into a suspended R-TWT operation mode, if a time duration of the suspended R-TWT operation mode exceeds a predetermined threshold value, the R-TWT agreement on the first link may be torn down.

In some embodiments, the TID-to-Link mapping Element may include an R-TWT information field for TID which is set to indicate whether the at least one TID for latency sensitive traffic is mapped to a plurality of links set up between the AP MLD and the non-AP MLD and a state of R-TWT operation, wherein the state of R-TWT operation is set to indicate the suspended R-TWT operation mode, or the R-TWT termination mode, or a non-existent R-TWT mode.

It should be noted that the R-TWT agreement setup process in various embodiments of the invention may further include establishing membership in a broadcast TWT for a non-AP STA in a non-AP MLD after R-TWT agreement has been set up between the non-AP MLD and an AP MLD. Some embodiments of the invention will be described below to illustrate the method for R-TWT operation for latency sensitive traffic in a WLAN according to various embodiments of the invention. It should be noted that these embodiments are provided for illustrative purposes only, not to limit the scope of the invention.

### First embodiment (Multi-link set up with default TID-to-Link mapping)

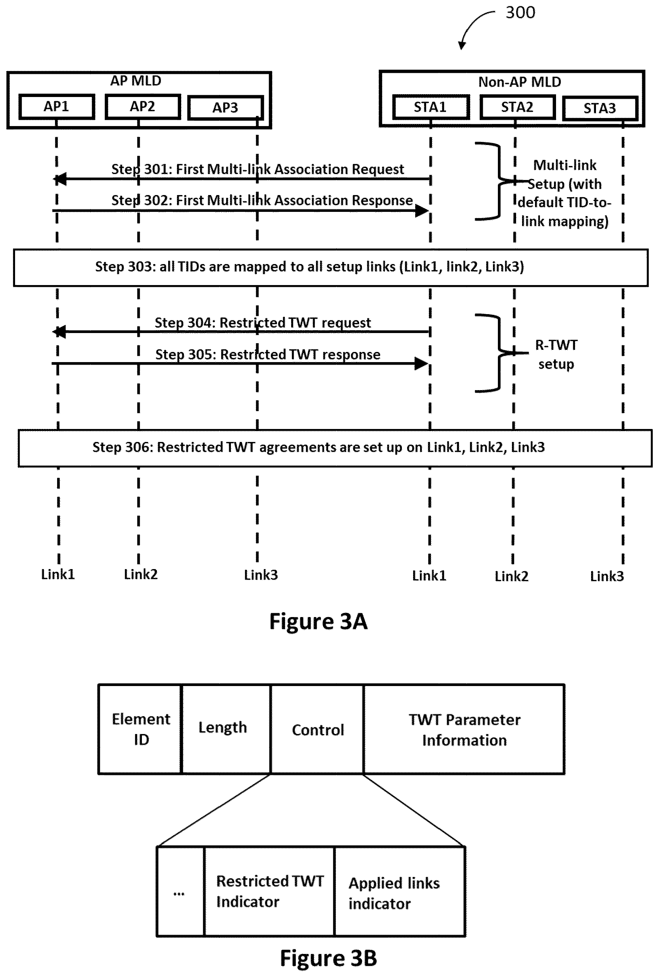

Figure 3A is a schematic diagram illustrating a method 300 for R-TWT operation for latency sensitive traffic in a WLAN according to a first embodiment of the invention. In this embodiment, the AP MLD includes three APs, i.e., AP1, AP2 and AP3, and the non-AP MLD includes three non-AP STAs, i.e., STA1, STA2 and STA3. As shown in Figure 3, the method 300 includes the following steps:
**Step** 301, STA1 sends a first Multi-link Association Request to AP1 to request for setting up a plurality of links between the AP MLD and the non-AP MLD. In this embodiment, the plurality of links between the AP MLD and the non-AP MLD include Link 1 between AP1 and STA1, Link 2 between AP2 and STA2, and Link 3 between AP3 and STA3.
**Step** 302, AP1 sends a first Multi-link Association Response to AP1 after receiving the first Multi-link Association Request to set up Link 1, Link 2 and Link 3.
**Step** 303, All TIDs are mapped to all of the links set up between the AP MLD and the non-AP MLD, i.e., Link 1, Link 2 and Link 3.
   The steps 301 and 302 are conducted to set up the link1 between AP1 and STA1, the link 2 between AP2 and STA2, and the link 3 between AP3 and STA3. This is the multi-link setup process in this embodiment. Although in this embodiment, AP1 and STA1 are used to conduct the multi-link setup process, it is to be appreciated by a person skilled in the art that AP2 and STA2, or AP3 and STA3 may also be used to conduct the multi-link setup process in other embodiments. In this embodiment, the TID-to-Link mapping is a default process which is conducted after the multi-link setup process. In this default process, all TIDs including the at least one TID for latency sensitive traffic are mapped to all of the links, i.e., Link 1, Link 2 and Link 3 in this embodiment, set up between the AP MLD and the non-AP MLD.
**Step** 304, STA1 sends a R-TWT request to AP1 to request for setting up R-TWT agreements on all of the links set up between the AP MLD and the non-AP MLD.
**Step** 305, AP1 sends a R-TWT response to STA1 after receiving the R-TWT request from STA1 to set up the R-TWT agreements on all of the links set up between the AP MLD and the non-AP MLD.
**Step** 306, R-TWT agreements are set up on all of the links set up between the AP MLD and the non-AP MLD, i.e., Link 1, Link 2 and Link 3 in this embodiment.

It should be noted that although in this embodiment, the R-TWT agreements are set up on all the links set up between the AP MLD and the non-AP MLD, in other embodiments, the R-TWT agreement may be set up on any one or more links set up between the AP MLD and the non-AP MLD.

In the first embodiment, the R-TWT request and/or the R-TWT response may include one or more R-TWT elements which are set to indicate whether R-TWT agreements are set up on all of the links between the AP MLD and the non-AP MLD.

Figure 3B is a block diagram illustrating a format of the R-TWT element according to some embodiments of the invention. As shown in Figure 3B, the control field of the R-TWT element includes a Restricted TWT (R-TWT) Indicator subfield and an Applied links indicator subfield. The R-TWT Indicator subfield is set to indicate whether the information included in the element is used for negotiation of R-TWT parameters. For example, the R-TWT Indicator subfield may be set to 1 to indicate that the information is for R-TWT, or 0 to indicate that the information is not for R-TWT. The applied links indicator subfield may be set to indicate whether the information included in the element is to be applied to all of the links set up between the AP-MLD and the non-AP MLD in this embodiment. Alternatively, the applied links indicator subfield may be set to indicate whether the information included in the element is to be applied to all of the links to which the at least one TIDs for latency sensitive traffic has been mapped. For example, the applied links indicator subfield may be set to 1 to indicate "YES", i.e., the information is to be applied to all of the links to which the at least one TIDs for latency sensitive traffic has been mapped, or 0 to indicate "NO", i.e., the information is not to be applied to all of the links to which the at least one TIDs for latency sensitive traffic has been mapped. It should be noted that the R-TWT Indicator subfield and the Applied links subfield in the control field of the R-TWT element may have different names in other embodiments.

### Second embodiment (Multi-link setup with TID-to-Link mapping negotiation)

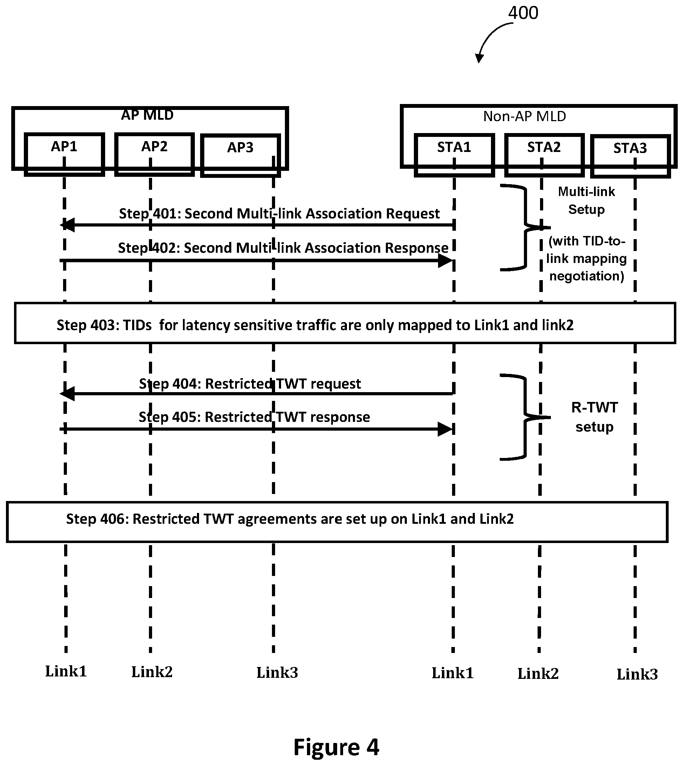

Figure 4 is a schematic diagram illustrating a method 400 for R-TWT operation for latency sensitive traffic in a WLAN according to a second embodiment of the invention. In this embodiment, the AP MLD includes three APs, i.e., AP1, AP2 and AP3, and the non-AP MLD includes three non-AP STAs, i.e., STA1, STA2 and STA3. As shown in Figure 4, the method 400 includes the following steps:
Step 401, STA1 sends a second Multi-link Association Request to AP1 to request for setting up a plurality of links between the AP MLD and the non-AP MLD. In this embodiment, the plurality of links include Link 1 between AP1 and STA1, Link 2 between AP2 and STA2, and Link 3 between AP3 and STA3.
Step 402, AP1 sends a second Multi-link Association Response to AP1 after receiving the Multi-link Association Request to set up Link 1, Link 2, and Link 3.
Step 403, TIDs for latency sensitive traffic are mapped to Link 1 and Link 2. In this embodiment, there are more than one TID for latency sensitive traffic are mapped to Link 1 and Link 2.
**Step** 404, STA1 sends a R-TWT request to AP1 to request for setting up R-TWT agreements on Link 1 and Link 2.
**Step** 405, AP1 sends a R-TWT response to STA1 after receiving the R-TWT request from STA1 to set up the R-TWT agreements on Link 1 and Link 2.
**Step** 406, R-TWT agreements are set up on Link 1 and Link 2.

In the second embodiment, the steps 401 and 402 are conducted to set up the plurality of links between the AP MLD and non-AP MLD. This multi-link setup process is the same as that in the first embodiment. In this embodiment, the TID-to-Link mapping is a negotiation process conducted with the mutli-link setup process. After this negotiation process, the at least one TID for latency sensitive traffic is only mapped to Link 1 and Link 2 among all of the links set up between the AP MLD and the non-AP MLD.

In the second embodiment, the R-TWT agreements are set up on all of the links to which the at least one TID for latency sensitive traffic has been mapped, i.e., Link 1 and Link 2. It should be noted that in other embodiments, the R-TWT agreement may be only mapped to Link 1 or Link 2.

In the second embodiment, the R-TWT request and/or the R-TWT response may include one or more R-TWT elements which are set to indicate whether R-TWT agreements are set up on all of the links to which the at least one TID for latency sensitive traffic has been mapped. The format of the R-TWT element may be as shown in Figure 3B. The control field of the R-TWT element includes a R-TWT Indicator subfield and an Applied links subfield. The R-TWT Indicator subfield is set to indicate whether the information included in the element is used for negotiation of R-TWT parameters, e.g., the parameters shown in an R-TWT Parameter Set field of an R-TWT element. For example, the R-TWT Indicator subfield may be set to 1 to indicate that the information is for R-TWT, or 0 to indicate that the information is not for R-TWT. The applied links indicator subfield may be set to indicate whether the information included in the element is to be applied to all of the links to which the at least one TIDs for latency sensitive traffic has been mapped. For example, the applied links indicator subfield may be set to 1 to indicate the information is to be applied to all of the links to which the at least one TIDs for latency sensitive traffic has been mapped, or 0 to indicate the information is not to be applied to all of the links to which the at least one TIDs for latency sensitive traffic has been mapped.

### Third embodiment (separate TID-to-Link mapping)

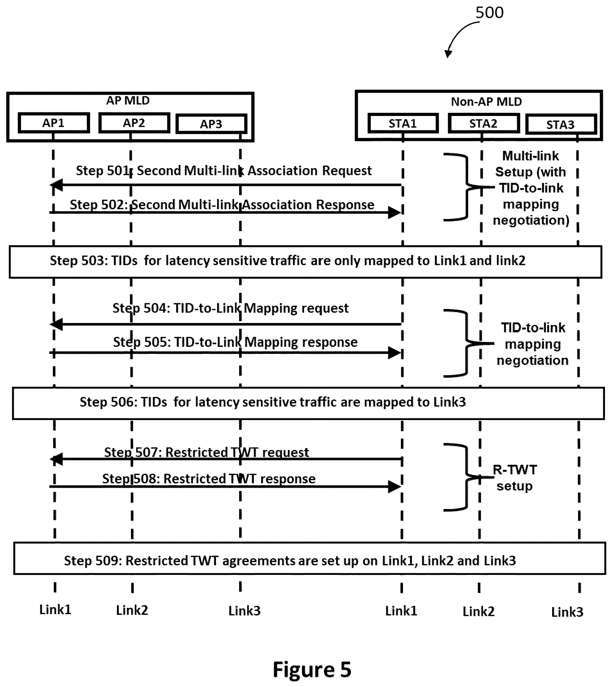

Figure 5 is a schematic diagram illustrating a method 500 for R-TWT operation for latency sensitive traffic in a WLAN according to a third embodiment of the invention. In this embodiment, the AP MLD includes three APs, i.e., AP1, AP2 and AP3, and the non-AP MLD includes three non-AP STAs, i.e., STA1, STA2 and STA3. As shown in Figure 5, the method 500 includes the following steps:
Steps 501 to 503 are same as Steps 401 to 403 respectively. It will not be repeated here.
**Step** 504, STA1 sends a TID-to-Link Mapping request to STA1 to request for mapping the at least one TID for latency sensitive traffic to Link 3.
**Step** 505, AP1 sends a TID-to-Link Mapping response to STA1 after receiving the TID-to-Link Mapping request to map the at least one TID for latency sensitive traffic to Link 3.
**Step** 506, TIDs for latency sensitive traffic are mapped to Link 3. It should be noted that in this embodiment, a plurality of TIDs for latency sensitive traffic are mapped to Link 3.
**Step** 507, STA1 sends a R-TWT request to AP1 to request for setting up R-TWT agreements on all of the links to which the at least one TID for latency sensitive traffic has been mapped. In this embodiment, the links include Link 1, Link 2 and Link 3.
**Step** 508, AP1 sends a R-TWT response to STA1 after receiving the first R-TWT request from STA1 to set up the R-TWT agreements on Link 1, Link 2 and Link 3.
**Step** 509, R-TWT agreements are set up on Link 1, Link 2 and Link 3.

In the third embodiment, same as the second embodiment, after the TID-to-Link mapping negotiation, the at least one LL TID is only mapped to Link 1 and Link 2, and no LL TID is mapped to Link 3. However, a TID-to-Link mapping update negotiation is initiated by the STA1 to establish a mapping of the at least one LL TID to Link 3. After mapping the at least one LL TID to Link 3, the R-TWT agreement step process is conducted to set up R-TWT agreements on all of the links to which the at least one LL TID has been mapped.

In the third embodiment, similar to the second embodiment, the R-TWT request and/or the R-TWT response may include one or more R-TWT elements which are set to indicate whether R-TWT agreements are set up on all of the links to which the at least one LL TID has been mapped. The format of the R-TWT element may be as shown in Figure 3B.

### Fourth embodiment (R-TWT setup integrated with TID-to-Link mapping negotiation)

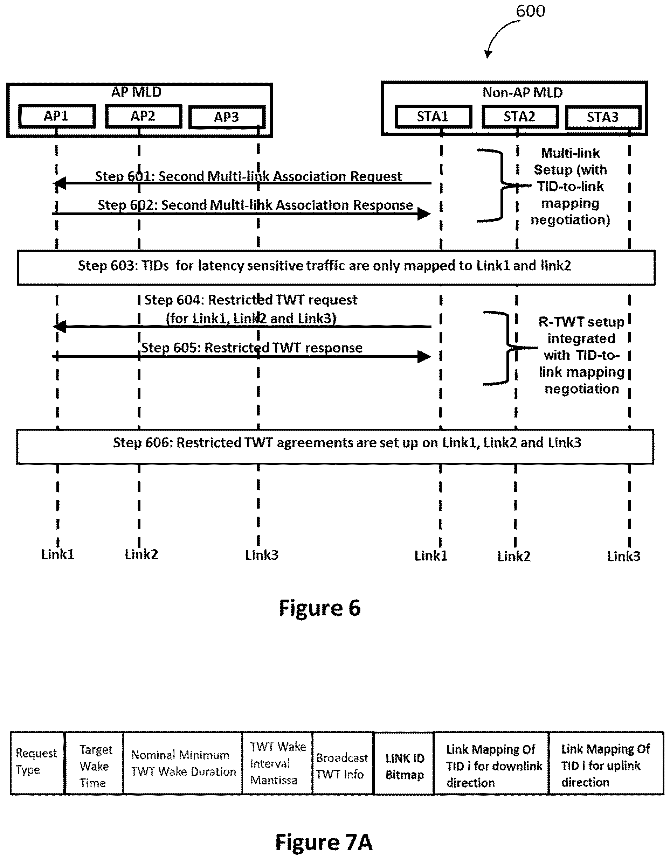

Figure 6 is a schematic diagram illustrating a method 600 for R-TWT operation for latency sensitive traffic in a WLAN according to a fourth embodiment of the invention. In this embodiment, the AP MLD includes three APs, i.e., AP1, AP2 and AP3, and the non-AP MLD includes three non-AP STAs, i.e., STA1, STA2 and STA3. As shown in Figure 5, the method 600 includes the following steps:
Steps 601 to 603 are same as Steps 401 to 403 respectively. It will not be repeated here. In this embodiment, Link,1, Link 2 and Link 3 are set up during the multi-link setup process and the at least one LL TID is only mapped to Link 1 and Link 2 through a TID-to-Link mapping negotiation. No LL TID has been mapped to Link 3.
**Step** 604, STA1 sends an integrated R-TWT request to AP1 to request for mapping the at least one LL TID to Link 3 and setting up R-TWT agreements on Link 1, Link 2 and Link 3.
**Step** 605, AP1 sends an integrated R-TWT response to STA1 after receiving the integrated R-TWT request from STA1 to map the TIDs for latency sensitive traffic to Link 3 and set up the R-TWT agreements on Link 1, Link 2 and Link 3.
**Step** 606, R-TWT agreements are set up on Link 1, Link 2 and Link 3.

In this embodiment, different from the embodiments mentioned above, the TID-to-Link mapping negotiation for Link 3 is integrated with the R-TWT agreement setup process. To conduct the TID-to-Link mapping negotiation together with the R-TWT agreement setup process, the integrated R-TWT request and the integrated R-TWT response may be set to include one or more R-TWT elements and TID-to-Link mapping elements. Alternatively, the integrated R-TWT request and integrated R-TWT response may be set to include one or more R-TWT elements, wherein each R-TWT element is set to include one or more TID-to-Link mapping subfields.

In one example, the integrated R-TWT request may be set to include an R-TWT element which is set to not only indicate the links on which R-TWT agreements are to be set up, but also the links to which the TIDs for latency sensitive traffic are to be mapped. After receiving the integrated R-TWT request, AP1 decides whether to set up the requested TID-to-Link mapping for Link 3 and whether to set up R-TWT agreements on the requested links, i.e., Link 1, Link 2, and Link 3 in this embodiment, and sends the integrated R-TWT response to STA1. The integrated R-TWT response may be set to include an R-TWT element which is set to indicate the links to which the TIDs for latency sensitive traffic have been mapped and the R-TWT agreements have been set up, e.g., with a value of Accept TWT.

Figure 7A is a block diagram illustrating a first format of a Broadcast R-TWT Parameter Set field of an R-TWT element with TID-to-Link mapping information according to some embodiments of the invention. As shown in Figure 7A, the Broadcast R-TWT Parameter Set field is set to include a Link ID Bitmap subfield, a Link Mapping of a TID for downlink direction subfield and a Link Mapping of a TID for uplink direction subfield.

The Link ID Bitmap subfield is set to indicate the at least one link to which the R-TWT element is applied. Each bit position of the Link Bitmap subfield corresponds to a link ID which is associated with a link. Each bit position may be set to indicate whether the R-TWT elements is applied to the associated link. For example, a bit position m of the Link Bitmap subfield corresponds to a link ID m. The bit position m may be set to "1" to indicate that the R-TWT element is applied to the link associated with the link ID m, or set to "0" to indicate that the R-TWT element is not applied to the link associated with the link ID m. If the Link ID Bitmap subfield is not present in the broadcast R-TWT Parameter field, the link to which the R-TWT element is applied is the link on which the R-TWT element is transmitted.

The Link Mapping of a TID, e.g., TID i, for downlink direction subfield may be set to indicate the at least one link on which frames belonging to the TID i of latency sensitive traffic for the downlink direction are sent. Each bit position of the Link Mapping of TID i for downlink direction subfield may correspond to a link ID associated with a link. For example, a bit position m of the Link Mapping of TID i for downlink direction subfield corresponds to a link ID m. The bit position m may be set to "1" to indicate that the TID i is mapped to the link associated with the link ID m for the downlink direction or set to "0" to indicate that the TID i is not mapped to the link associated with the link ID m for the downlink direction.

The Link Mapping of a TID, e.g., TID i, for uplink direction subfield may be set to indicate the links on which frames belonging to the TID i of latency sensitive traffic for the uplink direction are sent. Each bit position of the Link Mapping of TID i for uplink direction subfield may correspond to a link ID associated with a link. For example, a bit position m of the Link Mapping of TID i for uplink direction subfield corresponds to a link ID m. The bit position m may be set to "1" to indicate that the TID i is mapped to the link associated with the link ID m for the uplink direction or set to "0" to indicate that the TID i is not mapped to the link associated with the link ID m for the uplink direction.

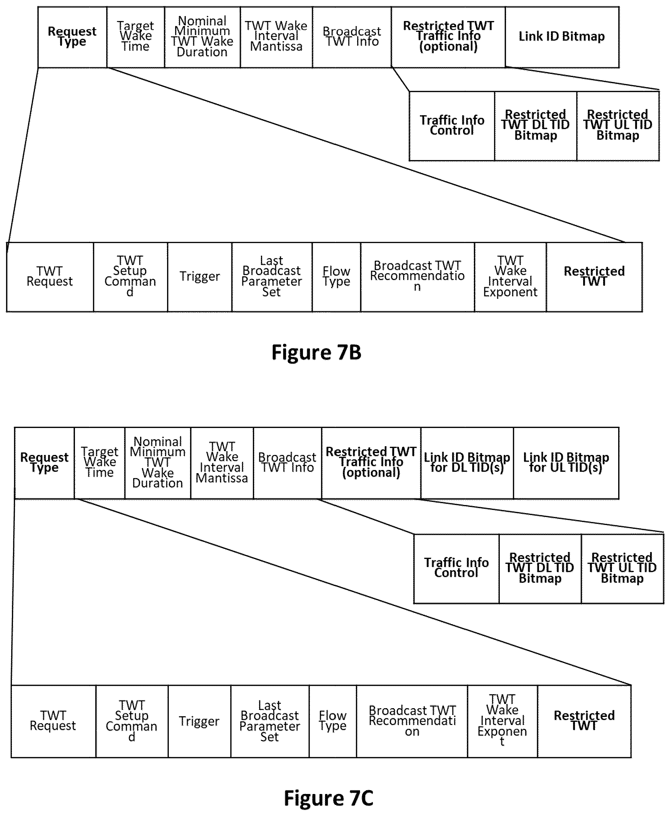

Figure 7B is a block diagram illustrating a second format of a Broadcast R-TWT Parameter Set field of an R-TWT element with TID-to-Link mapping information according to some embodiments of the invention. As shown in Figure 7B, in the second format, the Request type field of the Broadcast R-TWT Parameter Set field includes a R-TWT subfield which is set to indicate whether the TWT schedule specified by the corresponding Broadcast TWT Parameter Set field is a R-TWT schedule. For example, the R-TWT subfield may be set to 1 to indicate that the TWT schedule specified by the corresponding Broadcast TWT Parameter Set field is a R-TWT schedule, and set to 0 otherwise. The Broadcast R-TWT Parameter Set field further includes a Link ID Bitmap field and a R-TWT Traffic Info field.

In this example, the Link ID Bitmap is a field of the Broadcast TWT Parameter Set field. Alternatively, in other embodiments of the invention, the Link ID Bitmap may be a subfield of the R-TWT Traffic Info field. The Link ID Bitmap field is set to indicate the at least one link to which the R-TWT element is applied. A value of 1 in bit position m of the Link Bitmap field may indicates that the link associated with the link ID m is the link to which the R-TWT element is applied. A value of 0 in bit position m of the Link Bitmap field may indicate that the link associated with the link ID m is not the link to which the TWT element is applied. If no Link ID Bitmap field exists in the Broadcast TWT Parameter Set field, the link to which the R-TWT element is applied is the link on which the R-TWT element is transmitted.

The R-TWT DL/UL TID Bitmap subfields in the R-TWT Traffic Info field are set to indicate which TID(s) is identified by the TWT scheduling APs or the TWT scheduled STAs as latency sensitive traffic streams in the downlink direction on the links which are indicated in the Link ID Bitmap subfield. The Restricted TWT UL TID Bitmap subfield is set to indicate which TID(s) is identified by the TWT scheduling APs or the TWT scheduled STAs as latency sensitive traffic streams in the uplink direction on the links which are indicated in the Link ID Bitmap subfield. A value of 1 or 0 at bit position k in the bitmap may be set to indicate that TID k is classified as latency sensitive traffic stream and MSDUs of TID k are allowed/disallowed to be transmitted in the R-TWT SP(s) indicated by the TWT element on the links which are indicated in the Link ID Bitmap subfield.

Figure 7C is a block diagram illustrating a third format of a Broadcast R-TWT Parameter Set field of an R-TWT element with TID-to-Link mapping information according to some embodiments of the invention. As shown in Figure 7C, in the third format, the Request type field of the Broadcast R-TWT Parameter Set field includes a R-TWT subfield which is same as the R-TWT subfield in the second example as shown in Figure 7B. The Broadcast R-TWT Parameter Set field further includes a Link ID Bitmap for UL TID field, a Link ID Bitmap for DL TID field and a R-TWT Traffic Info field.

The Link ID Bitmap for DL TID is a field of the Broadcast TWT Parameter Set field as shown in Figure 7C in this third format. Alternatively, in other embodiments, it may be a subfield of the Restricted TWT Traffic Info field. The Link ID Bitmap for DL TID field is set to indicate the at least one link to which DL TID(s) is mapped. A value of 1 in bit position m of the Link Bitmap for DL TID field may indicate that the link associated with the link ID m is the link to which DL TID(s) is mapped. A value of 0 in bit position m of the Link Bitmap for DL TID field may indicate that the link associated with the link ID m is not the link to which DL TID(s) is mapped.

Similarly, the Link ID Bitmap for UL TID is a field of the Broadcast TWT Parameter Set field as shown in Figure 3C in this third format. Alternatively, it may be a subfield of the Restricted TWT Traffic Info field in other embodiments. The Link ID Bitmap for UL TID field may be set to indicate the at least one link to which UL TID(s) is mapped. A value of 1 in bit position m of the Link Bitmap for UL TID field may indicate that the link associated with the link ID m is the link to which UL TID(s) is mapped. A value of 0 in bit position m of the Link Bitmap for UL TID field may indicate that the link associated with the link ID m is not the link to which UL TID(s) is mapped.

The R-TWT DL TID Bitmap subfield in the R-TWT Traffic Info field may be set to indicate which TID(s) is identified by the TWT scheduling APs or the TWT scheduled STAs as latency sensitive traffic streams in the downlink direction on the links which are indicated in the Link ID Bitmap for the DL TID field. A value of 1 or 0 at bit position k in the bitmap may indicate that TID k is classified as latency sensitive traffic stream and MSDUs of TID k are allowed or disallowed to be transmitted in the restricted TWT SP(s) specified by the TWT element on the links which are indicated in the Link ID Bitmap for DL TID field.

The R-TWT UL TID Bitmap subfield in the R-TWT Traffic Info field may be set to indicate which TID(s) is identified by the TWT scheduling APs or the TWT scheduled STAs as latency sensitive traffic streams in the uplink direction on the links which are indicated in the Link ID Bitmap for UL TID subfield. A value of 1 or 0 at bit position k in the bitmap may indicate that TID k is classified as latency sensitive traffic stream and MSDUs of TID k are allowed or disallowed to be transmitted in the restricted TWT SP(s) specified by the TWT element on the links which are indicated in the Link ID Bitmap for UL TID field.

A person skilled in the art would understand that in other embodiments of the invention, the requested TID-to-Link mapping may not be set up if this request is not accepted by AP1, and accordingly the R-TWT agreements may only be set up on one or more of the requested links according to the decision of AP1.

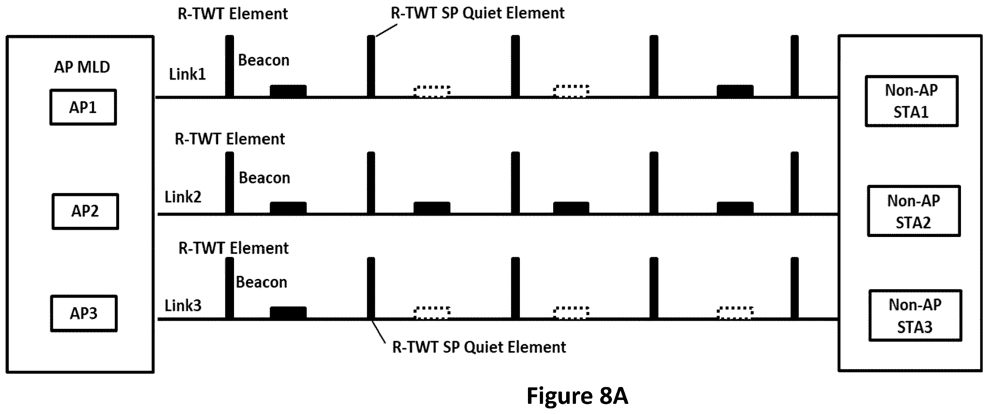

After the R-TWT agreements are successfully set up on at least one link between the AP MLD and the non-AP MLD, it may be found that no LL TID is mapped to one or more links on which the R-TWT agreements have been set up due to TID-to-Link mapping update/change in some embodiments of the invention. Figures 8A to 8C illustrate three possible ways to conduct the R-TWT operation in these scenarios according to some embodiments of the invention.

### R-TWT SP Quiet Element

Figure 8A is a schematic diagram illustrating an R-TWT operation with quiet elements after the R-TWT agreements have been set up on a plurality of links according to one embodiment of the invention. In this embodiment, the AP MLD and the non-AP MLD do not support a suspended R-TWT operation mode. In this embodiment, AP1, AP2 and AP3 in the AP MLD are EHT APs, while the non-AP STAs in the non-AP MLD may be EHT STAs or pre-EHT STAs.

Referring to Figure 8A, R-TWT agreements have been set up on the three links, i.e., Link 1, Link 2 and Link 3, between the AP MLD and the non-AP MLD. When no LL TID is mapped to Link 1 due to TID-to-Link mapping update/change, AP1 sends/broadcasts an R-TWT SP Quiet Element on Link 1 to announce an R-TWT SP quiet interval. During the R-TWT SP quiet interval, the R-TWT SPs will be ignored. As shown in Figure 8A, two R-TWT SP Quiet Elements are sent on Link 1. Similarly, no LL TID is mapped to Link 3 due to TID-to-Link mapping update in this embodiment, three R-TWT SP Quiet Elements are sent on Link 3 by AP3. The R-TWT SP Quiet Elements may be included in management (MGMT) frames sent from AP1/AP3 to STA1/STA3. STA1 and STA3 receive the R-TWT SP Quiet Elements and will ignore the R-TWT SPs that overlap with the R-TWT SP quiet intervals. Further, if a time duration of the R-TWT quiet intervals on a link exceeds a predetermined threshold, the R-TWT agreement on this link may be torn down.

### Suspended R-TWT Operation Mode

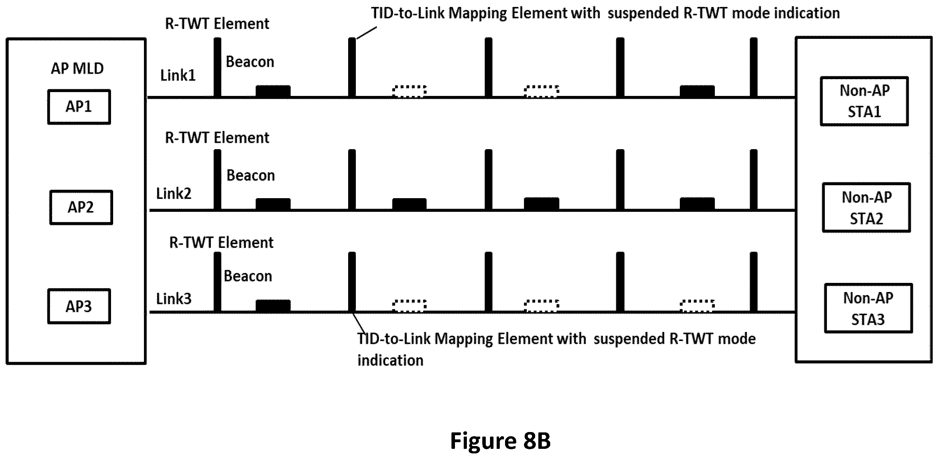

Figure 8B is a schematic diagram illustrating an R-TWT operation with TID-to-Link Mapping element indicating suspended R-TWT mode after the R-TWT agreements have been set up on a plurality of links according to one embodiment of the invention. In this embodiment, the AP MLD and the non-AP MLD support the suspended R-TWT operation mode. In this embodiment, AP1, AP2 and AP3 in the AP MLD are EHT APs, while the non-AP STAs in the non-AP MLD may be EHT STAs or pre-EHT STAs.

Referring to Figure 8B, R-TWT agreements have been set up on the three links, i.e., Link 1, Link 2 and Link 3, between the AP MLD and the non-AP MLD. When no LL TID is mapped to Link 1 due to TID-to-Link mapping update/change, AP1 sends/broadcasts a TID-to-Link Mapping element with suspended R-TWT mode indication on Link 1 to announce the updated TIDs mapped to Link 1. The TID-to-Link Mapping element with suspended R-TWT mode indication may be included in an MGMT frame transmitted from AP1 on Link 1 to STA1. In this embodiment, there are two TID-to-Link Mapping elements transmitted on Link 1. Similarly, there is also no LL TID mapped to Link 3 due to TID-to-Link mapping update in this embodiment, three TID-to-Link Mapping elements are sent on Link 3 by AP3.

Once STA1 and STA3 receive the TID-to-Link Mapping elements with suspended R-TWT mode indication on Link 1 and Link 3 respectively, the R-TWT SPs will be ignored during the effective time intervals of the updated TID-to-Link mapping indicated in the TID-to-Link Mapping elements. Further, if a time duration of the updated TID-to-Link mapping indicated in the TID-to-Link Mapping elements on a link exceeds a predetermined threshold, the R-TWT agreement on this link may be torn down.

### Terminated R-TWT Operation Mode

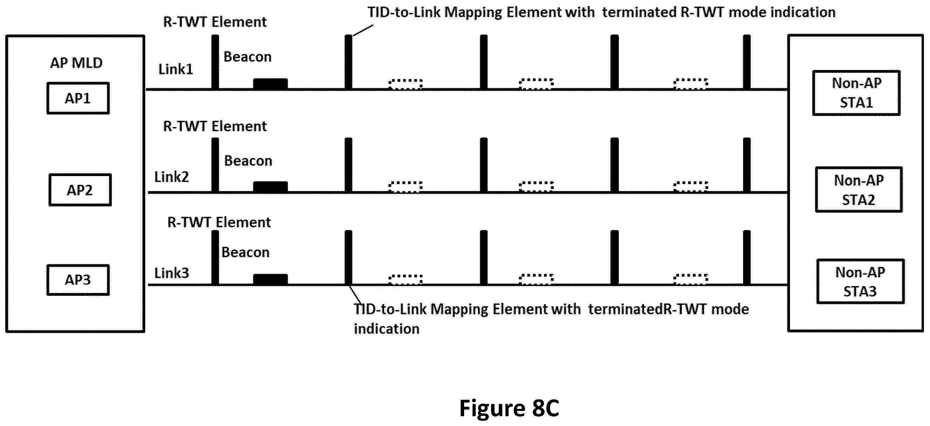

Figure 8C is a schematic diagram illustrating an R-TWT operation with TID-to-Link Mapping element indicating terminated R-TWT operation mode after the R-TWT agreements have been set up on a plurality of links according to one embodiment of the invention. In this embodiment, the AP MLD and the non-AP MLD support the suspended R-TWT operation mode. In this embodiment, AP1, AP2 and AP3 in the AP MLD are EHT APs, while the non-AP STAs in the non-AP MLD may be EHT STAs or pre-EHT STAs.

Referring to Figure 8C, R-TWT agreements have been set up on the three links, i.e., Link 1, Link 2 and Link 3, between the AP MLD and the non-AP MLD. When no LL TID is mapped to all of Link 1, Link 2 and Link 3 due to TID-to-Link mapping update/change, each AP in the AP MLD sends a TID-to-Link Mapping element with terminated R-TWT mode indication on the corresponding link to announce the updated TIDs mapped to the corresponding link. The TID-to-Link Mapping element may be included in an MGMT frame transmitted from AP to STA on the corresponding link.

Once each STA in the non-AP MLD receives the TID-to-Link Mapping elements on the corresponding link, the R-TWT SPs will be ignored during the effective time intervals of the updated TID-to-Link mapping indicated in the TID-to-Link Mapping elements. Further, if a time duration of the updated TID-to-Link mapping indicated in the TID-to-Link Mapping elements on a link exceeds a predetermined threshold, the R-TWT agreement on this link may be torn down.

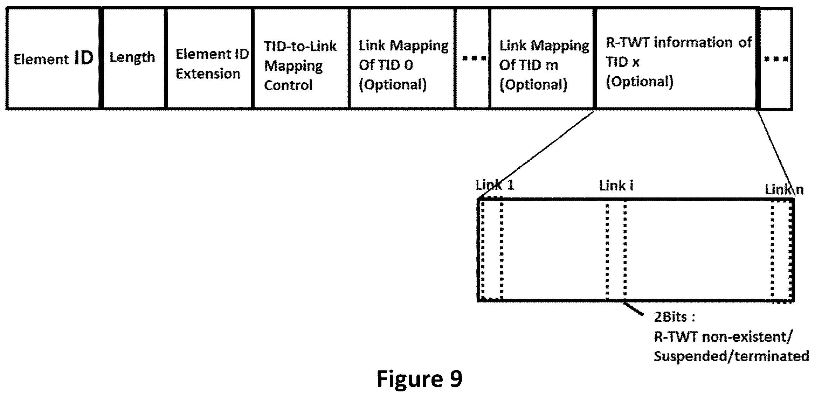

Figure 9 is a block diagram illustrating a format of a TID-to-Link mapping element with R-TWT information of TID x field according to some embodiments of the invention. The format shown in Figure 9 may be used in the embodiments in Figure 8B and 8C. Referring to Figure 9, the TID-to-Link Mapping Element is set to include an R-TWT information of TID x field. The R-TWT information of TID x field is set to indicate whether any LL TID is mapped to the links set up between the AP MLD and the non-AP MLD, and whether the R-TWT is allowed in these links. Each link is assigned two bits to indicate a state of the R-TWT operation on the link. For example, the 2 bits assigned to a link may be set to "11" to indicate that the R-TWT operation is terminated on the link, or "10" to indicate that the R-TWT operation is suspended on the link, or "00" to indicate that no R-TWT agreement has been set up on the link.

In the embodiments above as shown in Figures 8A to 8C, the R-TWT Element, R-TWT SP Quiet Element, TID-to-Link Mapping Element with suspended R-TWT mode indication, and TID-to-Link Mapping Element with termination R-TWT mode indication may be broadcast elements on the links set up between the AP MLD and non-AP MLD. However, in other embodiments, these elements may not be broadcast ones.

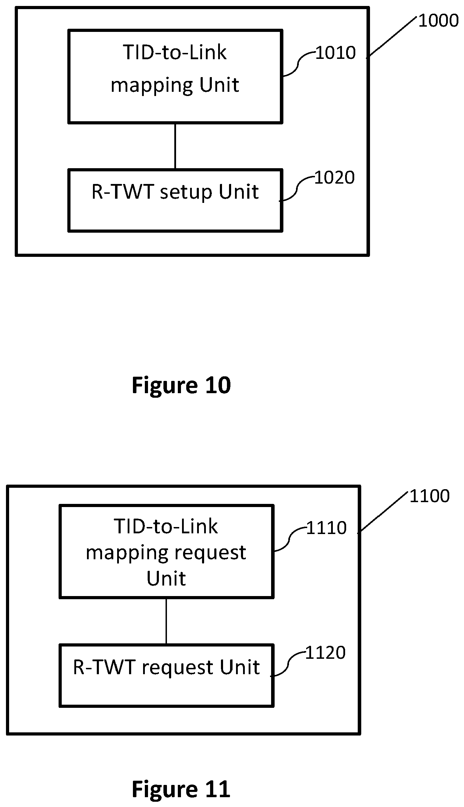

Various embodiments of the invention also provide an AP for R-TWT operation for latency sensitive traffic in a WLAN. Figure 10 is a schematic diagram illustrating an AP 1000 according to some embodiments of the invention. Referring to Figure 10, the AP 1000 may include a TID-to-Link mapping unit 1010 and a R-TWT setup unit 1020. The TID-to-Link mapping unit 1010 may be configured to send a first response to a first STA in a non-AP MLD to map at least one TID for latency sensitive traffic to at least one link set up between an AP MLD and the non-AP MLD, wherein the AP MLD comprises a plurality of APs including the AP, and the non-AP MLD comprises a plurality of non-AP STAs including the first STA. The R-TWT setup unit 1020 may be configured to send a R-TWT response to the first STA to set up R-TWT agreement on any one or more of the at least one link to which the at least one TID for latency sensitive traffic has been mapped.

In some embodiments, the TID-to-Link mapping unit may be further configured to receive a first request from the first STA. That is to say, the first response from the first AP may be an unsolicited response or a solicited response.

In some embodiments, the TID-to-Link mapping unit 1010 may include a first reception unit configured to receive a first Multi-link Association request from the first STA, and a first transmission unit 1 configured to send a first Multi-link Association response to the first STA to set up a plurality of links between the APs in the AP-MLD and the STAs in the non-AP MLD and map all TIDs to all of the plurality of links set up between the AP MLD and the non-AP MLD by default, wherein all TIDs include the at least one TID for latency sensitive traffic.

Alternatively, in some embodiments, the TID-to-Link mapping unit 1010 may include a second reception unit configured to receive a second Multi-link Association request from the first STA, and a second transmission unit configured to send a second Multi-link Association response to the first STA to set up a plurality of links between the APs in the AP-MLD and the STAs in the non-AP MLD and map at least one TID for latency sensitive traffic to a subset of the links set up between the AP-MLD and the non-AP MLD through a negotiation process with the first STA.

In some embodiments, the TID-to-Link mapping unit 1010 may be further configured to receive a TID-to-Link Mapping request from the first STA in the non-AP MLD, and send a TID-to-Link Mapping response to the first STA to map the at least one TID for latency sensitive traffic to a link between the AP-MLD and the non-AP MLD to which the at least one TID for latency sensitive traffic has not been mapped.

In some embodiments, the R-TWT setup unit may be further configured to receive an R-TWT request from the first STA before sending the R-TWT response to the first STA. That is to say, the R-TWT agreement may be set up by an unsolicited R-TWT response from the first AP or a solicited R-TWT response from the first AP.

In some embodiments, the R-TWT request and/or the R-TWT response may include an R-TWT element including a first subfield and a second subfield in a Control field, wherein the first subfield is set to indicate whether information included in the R-TWT element is for negotiation of parameters of R-TWT, and the second subfield is set to indicate whether the information included in the R-TWT element is applied to all links to which the at least one TID for latency sensitive traffic has been mapped.

In some embodiments, the R-TWT setup unit 1020 may be further configured to receive an integrated R-TWT request from the first STA and send an integrated R-TWT response to the first STA to map the at least one TID for latency sensitive traffic to at least one link between the AP-MLD and the non-AP MLD to which the at least one TID for latency sensitive traffic has not been mapped and set up the R-TWT agreement on any one or more of the at least one link to which the at least one TID for latency sensitive traffic has been mapped.

In some embodiments, the integrated R-TWT request and/or the integrated R-TWT response may be set to include at least one first R-TWT element indicating the at least one link on which the R-TWT agreement is set up and at least one TID-to-Link mapping element indicating the at least one link to which the at least one TID for latency sensitive traffic is mapped. Alternatively, in some embodiments, the integrated R-TWT request and/or the integrated R-TWT response may be set to include at least one second R-TWT element indicating the one or more links on which the R-TWT agreement is set up and the at least one link to which the at least one TID for latency sensitive traffic is mapped. Three examples of the format of the Broadcast TWT Parameter Set field in the R-TWT element are shown in Figures 7A to 7C.

In some embodiments, the AP 1000 may further include a first R-TWT termination unit configured to tear down a R-TWT agreement set up on a first link between the AP and the first STA if no TID for latency sensitive traffic is mapped to a first link due to TID-to-Link mapping update.

In some embodiments, the AP 1000 may further include a second R-TWT termination unit configured to, if the AP MLD and the non-AP MLD support a suspended R-TWT operation mode, and no TID for latency sensitive traffic is mapped to a first link set up between the AP and the first STA, send a R-TWT SP Quiet Element or a TID-to-Link Mapping Element with a suspended R-TWT mode indication on the first link to enter the first link into a suspended TWT operation mode, or send a TID-to-Link Mapping Element with a R-TWT termination mode indication on the first link to terminate the R-TWT agreement on the first link. In some embodiments, the second R-TWT termination unit 1030B may be further configured to tear down the R-TWT agreement on the first link if a time duration of the suspended R-TWT operation mode exceeds a predetermined threshold value.

In some embodiments, the TID-to-Link mapping Element may include an R-TWT information field for TID which is set to indicate whether the at least one TID for latency sensitive traffic is mapped to a plurality of links set up between the AP MLD and the non-AP MLD and a state of R-TWT operation, wherein the state of R-TWT operation is set to indicate the suspended R-TWT operation mode, or the R-TWT termination mode, or a non-existent R-TWT mode.

Various embodiments of the invention also provide an STA for R-TWT operation for latency sensitive traffic in a WLAN. Figure 11 is a schematic diagram illustrating an STA 1100 according to some embodiments of the invention. Referring to Figure 11, the STA 1100 may include a TID-to-Link mapping request unit 1110 and an R-TWT request unit 1120. The TID-to-Link mapping request unit 1110 may be configured to receive a first response from a first AP in an AP MLD to map at least one TID for latency sensitive traffic to at least one link set up between the AP MLD and a non-AP MLD, wherein the AP MLD comprises a plurality of APs including the first AP and the non-AP MLD comprises a plurality of non-AP STAs including the STA. The R-TWT request unit 1120 may be configured to receive a R-TWT response from the first AP to set up R-TWT agreement on any one or more of the at least one link to which the at least one TID for latency sensitive traffic has been mapped.

In some embodiments, the TID-to-Link mapping request unit 1110 may be further configured to send a first request to the first AP. That is to say, the first response from the first AP may be an unsolicited response or a solicited response.

In some embodiments, the TID-to-Link mapping request unit 1110 may include a first transmission unit configured to send a first Multi-link Association request to the first AP; and a first reception unit configured to receive a first Multi-link Association response from the first AP to set up a plurality of links between the APs in the AP-MLD and the STAs in the non-AP MLD and map all TIDs to all of the plurality of links set up between the AP MLD and the non-AP MLD by default, wherein all TIDs include the at least one TID for latency sensitive traffic.

Alternatively, in some embodiments, the TID-to-Link mapping request unit 1110 may include a second transmission unit configured to send a second Multi-link Association request to the first AP, and a second reception unit configured to receive a second Multi-link Association response from the first AP to set up a plurality of links between the APs in the AP-MLD and the STAs in the non-AP MLD and map at least one TID for latency sensitive traffic to a subset of the links set up between the AP-MLD and the non-AP MLD through a negotiation process with the first AP.

In some embodiments, the TID-to-Link mapping request unit 1110 may be further configured to send a TID-to-Link Mapping request to the first AP, and receive a TID-to-Link Mapping response from the first AP to map the at least one TID for latency sensitive traffic to a link between the AP-MLD and the non-AP MLD to which the at least one TID for latency sensitive traffic has not been mapped.

In some embodiments, the R-TWT request unit may be further configured to send a R-TWT request to the first AP before receiving the R-TWT response. That is to say, the R-TWT agreement may be set up by an unsolicited R-TWT response from the first AP or a solicited R-TWT response from the first AP.

In some embodiments, the R-TWT request and/or the R-TWT response comprises an R-TWT element including a first subfield and a second subfield in a Control field, wherein the first subfield is set to indicate whether information included in the R-TWT element is for negotiation of parameters of R-TWT, and the second subfield is set to indicate whether the information included in the R-TWT element is applied to all links to which the at least one TID for latency sensitive traffic has been mapped.

In some embodiments, the R-TWT request unit 1120 may be further configured to send an integrated R-TWT request to the first AP and receive an integrated R-TWT response from the first AP to map the at least one TID for latency sensitive traffic to at least one link between the AP-MLD and the non-AP MLD to which the at least one TID for latency sensitive traffic has not been mapped and set up the R-TWT agreement on any one or more of the at least one link to which the at least one TID for latency sensitive traffic has been mapped.

In some embodiments, the integrated R-TWT request and/or the integrated R-TWT response may be set to include at least one first R-TWT element indicating the at least one link on which the R-TWT agreement is set up and at least one TID-to-Link mapping element indicating the at least one link to which the at least one TID for latency sensitive traffic is mapped.

Alternatively, in some embodiments, the integrated R-TWT request and/or the integrated R-TWT response may be set to include at least one second R-TWT element indicating the one or more links on which the R-TWT agreement is set up and the at least one link to which the at least one TID for latency sensitive traffic is mapped. Three examples of the format of the Broadcast TWT Parameter Set field in the R-TWT element are shown in Figures 7A to 7C.

In some embodiments, the STA 1100 may further include a first R-TWT termination unit configured to tear down a R-TWT agreement set up on a first link between the first AP and the STA if no TID for latency sensitive traffic is mapped to a first link.

In some embodiments, the STA 1100 may further include a second R-TWT termination unit configured to, if the AP MLD and the non-AP MLD support a suspended R-TWT operation mode, and no TID for latency sensitive traffic is mapped to a first link set up between the first AP and the STA, enter the first link into a suspended TWT operation mode upon receipt of a R-TWT SP Quiet Element or a TID-to-Link Mapping Element with a suspended R-TWT mode indication sent by the first AP on the first link, or terminate the R-TWT agreement on the first link upon receipt of a TID-to-Link Mapping Element with a R-TWT termination indication sent by the first AP on the first link. Preferably, the second R-TWT termination unit may be further configured to tear down the R-TWT agreement on the first link if a time duration of the suspended R-TWT operation mode exceeds a predetermined threshold value.

In some embodiments, the TID-to-Link mapping Element comprises an R-TWT information field for TID which is set to indicate whether the at least one TID for latency sensitive traffic is mapped to a plurality of links set up between the AP MLD and the non-AP MLD and a state of R-TWT operation, wherein the state of R-TWT operation is set to indicate the suspended R-TWT operation mode, or the R-TWT termination mode, or a non-existent R-TWT mode.

Various embodiments of the invention also provide an AP for R-TWT operation for latency sensitive traffic in a WLAN. The AP may include a memory to store instructions for performing the first method for R-TWT operation for latency sensitive traffic in the WLAN, and a processor communicably coupled with the memory, the processor configured to execute the instructions to perform the first method for R-TWT operation for latency sensitive traffic in a WLAN as described in various embodiments of the invention.

Various embodiments of the invention also provide an STA for R-TWT operation for latency sensitive traffic in a WLAN. The STA may include a memory to store instructions for performing the second method for R-TWT operation for latency sensitive traffic in the WLAN, and a processor communicably coupled with the memory, the processor configured to execute the instructions to perform the second method for R-TWT operation for latency sensitive traffic in a WLAN as described in various embodiments of the invention.

Various embodiments of the invention also provide a computer program product comprising instructions to cause a computer to perform any method for R-TWT operation for latency sensitive traffic in a WLAN according to any embodiment of the invention, when executed thereon.

Various embodiments of the invention also provide a computer program comprising instructions to cause a computer to perform a method for R-TWT operation for latency sensitive traffic in a WLAN according to any embodiment of the invention, when executed thereon.

Various embodiments of the invention also provide a non-volatile storage medium comprising computer program codes to cause a computer to perform a method for R-TWT operation for latency sensitive traffic in a WLAN according to any embodiment of the invention, when executed thereon.

Various embodiments of the invention also provide a chip configured to perform a method for R-TWT operation for latency sensitive traffic in a WLAN according to any embodiment of the invention.

At least some steps of the methods for R-TWT operation for latency sensitive traffic in a WLAN according to any embodiments of the invention described above may be implemented utilizing hardware, a processor executing firmware instructions, a processor executing software instructions, or any combination thereof. When implemented utilizing a processor executing software or firmware instructions, the software or firmware instructions may be stored in any computer readable memory such as on a magnetic disk, an optical disk, or other storage medium, in a RAM or ROM or flash memory, processor, hard disk drive, optical disk drive, tape drive, etc. Likewise, the software or firmware instructions may be delivered to a user or a system via any known or desired delivery method including, for example, on a computer readable disk or other transportable computer storage mechanism or via communication media.

As described above, various embodiments of the invention provide an effective mechanism for R-TWT operation for latency sensitive traffic in a WLAN to further optimize spectral efficiency, increase throughout and reduce power consumption of the WLAN. With the methods and devices provided in embodiments of the invention, the TID-to-Link mapping may be performed as a default process during or after the multi-link setup process, a negotiation process together with the multi-link setup process, a separate negotiation process after the multi-link setup process, or an integrated negotiation process with the R-TWT setup process, depending on the actual needs of the communication system.

It is to be understood that the embodiments and features described above should be considered exemplary and not restrictive. Many other embodiments will be apparent to those skilled in the art from consideration of the specification and practice of the invention. The scope of the invention should, therefore, be determined with reference to the appended claims. Furthermore, certain terminology has been used for the purposes of descriptive clarity, and not to limit the disclosed embodiments of the invention.

## Claims

1. A method for restricted target wake time, R-TWT, operation for latency sensitive traffic in a wireless local area network, WLAN, the method comprising:
sending (102), by a first Access Point, AP, in an AP multi-link device, MLD, a first response to a first station, STA, in a non-AP MLD to map all Traffic Identifiers, TIDs, to all of a plurality of links set up between the AP MLD and the non-AP MLD by default; wherein all TIDs include at least one TID for latency sensitive traffic and the AP MLD comprises a plurality of APs and the non-AP MLD comprises a plurality of non-AP STAs, and
sending (104), by the first AP, a R-TWT response to the first STA to set up R-TWT agreement on any one or more of the at least one link to which the at least one TID for latency sensitive traffic has been mapped.

2. The method according to claim 1, further comprising: receiving, by the first AP, a first request from the first STA.

3. The method according to claim 2, wherein the receiving the first request comprises:
receiving, by the first AP, a first Multi-link Association request from the first STA.

4. The method according to any one of claim 1 to claim 3, further comprising: before sending the R-TWT response to the first STA, receiving, by the first AP, a R-TWT request from the first STA.

5. The method according to any one of claim 1 to claim 4, wherein the R-TWT request and/or the R-TWT response comprises one or more R-TWT elements which are set to indicate whether R-TWT agreements are set up on all of the links to which the at least one TID for latency sensitive traffic has been mapped.

6. The method according to claim 5, wherein the R-TWT elements comprise a Broadcast R-TWT Parameter Set field which is set to include an R-TWT Traffic info field.

7. The method according to claim 6, wherein the R-TWT Traffic info field comprises a Traffic info Control subfield, an R-TWT DL TID bitmap, and an R-TWT UL TID bitmap; wherein the R-TWT DL TID Bitmap subfields are set to indicate which TID(s) is identified by the TWT scheduling APs or the TWT scheduled STAs as latency sensitive traffic streams in the downlink direction on the links which are indicated in a Link ID Bitmap subfield and the Restricted TWT UL TID Bitmap subfield is set to indicate which TID(s) is identified by the TWT scheduling APs or the TWT scheduled STAs as latency sensitive traffic streams in the uplink direction on the links which are indicated in the Link ID Bitmap subfield.

8. The method according to claim 7, wherein a value of 1 or 0 at bit position k in the UL or DL TID bitmap is set to indicate that TID k is classified as latency sensitive traffic stream.

9. The method according to any one of claim 1 to claim 8, further comprising: tearing down, by the first AP, a R-TWT agreement set up on a first link between the first AP and the first STA if no TID for latency sensitive traffic is mapped to the first link due to TID-to-Link mapping update.

10. A method for restricted target wake time, R-TWT, operation for latency sensitive traffic in a wireless local area network, WLAN, the method comprising:
receiving (102), by a first station, STA, in a non-access point multi-link device, non-AP MLD, a first response from a first AP in an AP MLD to map all Traffic Identifiers, TIDs, to all of a plurality of links set up between the AP MLD and the non-AP MLD, wherein all TIDs include at least one TID for latency sensitive traffic, the AP MLD comprises a plurality of APs and the non-AP MLD comprises a plurality of non-AP STAs, and
receiving (104), by the first STA, a R-TWT response to set up R-TWT agreement on any one or more of the at least one link to which the at least one TID for latency sensitive traffic has been mapped.

11. The method according to claim 10, further comprising: sending, by the first STA, a first request to the first AP.

12. The method according to claim 11, wherein the sending the first request comprises:
sending, by the first STA, a first Multi-link Association request to the first AP,
and the receiving the first response comprises:
receiving, by the first STA, a first Multi-link Association response from the first AP to set up a plurality of links between the APs in the AP-MLD and the STAs in the non-AP MLD and map all TIDs to all of the plurality of links set up between the AP MLD and the non-AP MLD by default, wherein all TIDs include the at least one TID for latency sensitive traffic.

13. The method according to claim 11, wherein the sending the first request comprises: sending, by the first STA, a second Multi-link Associate request from the first STA, and the receiving the first response comprises: receiving, by the first STA, a second Multi-link Association response from the first AP to set up a plurality of links between the APs in the AP-MLD and the STAs in the non-AP MLD and map at least one TID for latency sensitive traffic to a subset of the links set up between the AP-MLD and the non-AP MLD through a negotiation process with the first AP.

14. The method according to claim 13, further comprising:
sending, by the first STA, a TID-to-Link Mapping request to the first AP; and
receiving, by the first STA, a TID-to-Link Mapping response from the first AP to map the at least one TID for latency sensitive traffic to a link between the AP-MLD and the non-AP MLD to which the at least one TID for latency sensitive traffic has not been mapped.

15. The method according to any one of claim 10 to claim 14, further comprising: before receiving the R-TWT response, sending, by the first STA, a R-TWT request to the first AP.

16. The method according to claim 15, wherein the R-TWT request and/or the R-TWT response comprises an R-TWT element including a first subfield and a second subfield in a Control field, wherein the first subfield is set to indicate whether information included in the R-TWT element is for negotiation of parameters of R-TWT, and the second subfield is set to indicate whether the information included in the R-TWT element is applied to all links to which the at least one TID for latency sensitive traffic has been mapped.

17. An access point, AP (1000), for restricted target wake time, R-TWT, operation for latency sensitive traffic in a WLAN, the AP comprising a memory to store instructions for performing a method for R-TWT operation for latency sensitive traffic in the WLAN according to any one of claim 1 to claim 9, and a processor communicably coupled with the memory, the processor configured to execute the instructions stored in the memory to perform the method for R-TWT operation for latency sensitive traffic in the WLAN.

18. A station, STA (1100), for restricted target wake time, R-TWT, operation for latency sensitive traffic in a WLAN, the STA comprising a memory to store instructions for performing a method for RU allocation in the WLAN according to any one of claim 10 to claim 16, and a processor communicably coupled with the memory, the processor configured to execute the instructions stored in the memory to perform the method for R-TWT operation for latency sensitive traffic in the WLAN.

## Patentansprüche

1. Verfahren für eingeschränkten Zielaufwachzeit-, R-TWT-Betrieb für latenzempfindlichen Datenverkehr in einem drahtlosen lokalen Netzwerk, WLAN, wobei das Verfahren umfasst:
Senden (102) durch einen ersten Zugangspunkt, AP, in einer AP-Multilink-Vorrichtung, MLD, einer ersten Antwort an eine erste Station, STA, in einer Nicht-AP-MLD, um alle Datenverkehrskennungen, TIDs, allen einer Vielzahl von Verbindungen zuzuordnen, die standardmäßig zwischen dem AP-MLD und dem Nicht-AP-MLD eingerichtet sind; wobei alle TIDs mindestens eine TID für latenzempfindlichen Datenverkehr beinhalten und das AP-MLD eine Vielzahl von APs umfasst und das Nicht-AP-MLD mehrere Nicht-AP-STAs umfasst, und
Senden (104) durch den ersten AP einer R-TWT-Antwort an die erste STA, um eine R-TWT-Vereinbarung auf einer oder mehreren der mindestens einen Verbindung einzurichten, denen die mindestens eine TID für latenzempfindlichen Datenverkehr zugeordnet worden ist.

2. Verfahren nach Anspruch 1, weiter umfassend: Empfangen durch den ersten AP einer ersten Anfrage von der ersten STA.

3. Verfahren nach Anspruch 2, wobei das Empfangen der ersten Anfrage umfasst: Empfangen durch den ersten AP einer ersten Multi-Link-Verbindungsanfrage von der ersten STA.

4. Verfahren nach einem der Ansprüche 1 bis 3, weiter umfassend: vor dem Senden der R-TWT-Antwort an die erste STA, Empfangen einer R-TWT-Anfrage von der ersten STA durch den ersten AP.

5. Verfahren nach einem von Anspruch 1 bis Anspruch 4, wobei die R-TWT-Anfrage und/oder die R-TWT-Antwort ein oder mehrere R-TWT-Elemente umfasst, die eingestellt sind, um anzugeben, ob R-TWT-Vereinbarungen auf allen Verbindungen eingerichtet wurden, denen mindestens eine TID für latenzempfindlichen Datenverkehr zugeordnet worden ist.

6. Verfahren nach Anspruch 5, wobei die R-TWT-Elemente ein Broadcast R-TWT Parametersatz-Feld umfassen, das eingestellt ist, um ein R-TWT Datenverkehrsinfo-Feld zu beinhalten.

7. Verfahren nach Anspruch 6, wobei das R-TWT Datenverkehrsinfo-Feld ein Datenverkehrsinfo-Steuerunterfeld, eine R-TWT DL TID-Bitmap und eine R-TWT UL TID-Bitmap umfasst;
wobei die R-TWT DL TID Bitmap-Unterfelder eingestellt sind, um anzugeben, welche TID(s) von den TWT-Planungs-APs oder den geplanten TWT-STAs als latenzempfindliche Datenverkehrsströme in Downlink-Richtung auf den Verbindungen identifiziert werden, die in einem Link ID Bitmap-Unterfeld angegeben sind, und das eingeschränkte TWT UL TID Bitmap-Unterfeld eingestellt ist, um anzugeben, welche TID(s) von den TWT-Planungs-APs oder den geplanten TWT-STAs als latenzempfindliche Datenverkehrsströme in Uplink-Richtung auf den Verbindungen identifiziert werden, die in dem Link ID Bitmap-Unterfeld angegebenen sind.

8. Verfahren nach Anspruch 7, wobei ein Wert von 1 oder 0 an der Bit-Position k in der UL- oder DL-TID-Bitmap gesetzt wird, um anzugeben, dass TID k als latenzempfindlicher Datenverkehrsstrom klassifiziert wird.

9. Verfahren nach einem der Ansprüche 1 bis 8 weiter umfassend: Aufheben einer R-TWT-Vereinbarung durch den ersten AP, die auf einer ersten Verbindung zwischen dem ersten AP und der ersten STA eingerichtet worden ist, wenn der ersten Verbindung aufgrund einer Aktualisierung der TID-zu-Verbindungszuordnung keine TID für latenzempfindlichen Datenverkehr zugeordnet wird.

10. Verfahren für eingeschränkten Zielaufwachzeit-, R-TWT-Betrieb für latenzempfindlichen Datenverkehr in einem drahtlosen lokalen Netzwerk, WLAN, wobei das Verfahren umfasst:
Empfangen (102) durch eine erste Station, STA, in einer Nicht-Access-Point-Multilink-Vorrichtung, Nicht-AP MLD, einer ersten Antwort von einer ersten AP, in einer AP-MLD, um alle Datenverkehrskennungen, TIDs, allen einer Vielzahl von Verbindungen zuzuordnen, die zwischen dem AP-MLD und dem Nicht-AP-MLD eingerichtet sind; wobei alle TIDs mindestens eine TID für latenzempfindlichen Datenverkehr beinhalten, das AP-MLD eine Vielzahl von APs umfasst und das Nicht-AP-MLD mehrere Nicht-AP-STAs umfasst, und
Empfangen (104) durch die erste STA einer R-TWT-Antwort, um eine R-TWT-Vereinbarung auf einer oder mehreren der mindestens einen Verbindung einzurichten, denen die mindestens eine TID für latenzempfindlichen Datenverkehr zugeordnet worden ist.

11. Verfahren nach Anspruch 10, weiter umfassend: Senden durch die erste STA einer ersten Anfrage an den ersten AP.

12. Verfahren nach Anspruch 11, wobei das Senden der ersten Anfrage umfasst:
Senden durch die erste STA einer ersten Multi-Link-Verbindungsanfrage an den ersten AP,
und das Empfangen der ersten Antwort umfasst:
Empfangen einer ersten Multi-Link-Verbindungsantwort durch die erste STA vom ersten AP, um eine Vielzahl von Verbindungen zwischen den APs im AP-MLD und den STAs im Nicht-AP-MLD einzurichten und standardmäßig alle TIDs allen Verbindungen zwischen dem AP-MLD und dem Nicht-AP-MLD zuzuordnen, wobei alle TIDs mindestens eine TID für latenzempfindlichen Datenverkehr beinhalten.

13. Verfahren nach Anspruch 11, wobei das Senden der ersten Anfrage umfasst: Senden durch die erste STA einer zweiten Multi-Link-Verbindungsanfrage von der ersten STA, und das Empfangen der ersten Antwort umfasst: Empfangen durch die erste STA einer zweiten Multi-Link-Verbindungsantwort von der ersten STA, um eine Vielzahl von Verbindungen zwischen den APs im AP-MLD und den STAs im Nicht-AP-MLD einzurichten und mindestens eine TID für latenzempfindlichen Datenverkehr einer Teilmenge der Verbindungen, die zwischen dem AP-MLD und dem Nicht-AP-MLD eingerichtet sind, durch einen Aushandlungsprozess mit dem ersten AP zuzuordnen.

14. Verfahren nach Anspruch 13, weiter umfassend:
Senden durch die erste STA einer Anfrage zur TID-zu-Verbindungszuordnung an den ersten AP; und
Empfangen durch die erste STA einer Antwort zur TID-zu-Verbindungszuordnung vom ersten AP, um mindestens eine TID für latenzempfindlichen Datenverkehr einer Verbindung zwischen dem AP-MLD und dem Nicht-AP-MLD zuzuordnen, der mindestens eine TID für latenzempfindlichen Datenverkehr nicht zugeordnet worden ist.

15. Verfahren nach einem von Anspruch 10 bis Anspruch 14, weiter umfassend: vor Empfangen der R-TWT-Antwort, Senden durch die erste STA einer R-TWT-Anfrage an den ersten AP.

16. Verfahren nach Anspruch 15, wobei die R-TWT-Anfrage und/oder die R-TWT-Antwort ein R-TWT-Element umfasst, das ein erstes Unterfeld und ein zweites Unterfeld in einem Steuerfeld beinhaltet, wobei das erste Unterfeld eingestellt ist, um anzugeben, ob Informationen, die im R-TWT-Element beinhaltet sind, zur Aushandlung von Parametern des R-TWT dienen, und das zweite Unterfeld eingestellt ist, um anzugeben, ob die Informationen, die im R-TWT-Element beinhaltet sind, auf alle Verbindungen angewendet werden, denen mindestens eine TID für latenzempfindlichen Datenverkehr zugeordnet worden ist.

17. Zugangspunkt, AP (1000), für eingeschränkten Zielaufwachzeit-, R-TWT-Betrieb für latenzempfindlichen Datenverkehr in einem WLAN, wobei der AP einen Speicher umfasst, um Anweisungen zum Durchführen eines Verfahrens für den R-TWT-Betrieb für latenzempfindlichen Datenverkehr im WLAN nach einem der Ansprüche 1 bis 9 zu speichern, und einen mit dem Speicher kommunikativ gekoppelten Prozessor, der konfiguriert ist, um die im Speicher gespeicherten Anweisungen auszuführen, um das Verfahren für den R-TWT-Betrieb für latenzempfindlichen Datenverkehr im WLAN durchzuführen.

18. Station, STA (1100), für eingeschränkten Zielaufwachzeit-, R-TWT-Betrieb für latenzempfindlichen Datenverkehr in einem WLAN, wobei die STA einen Speicher umfasst, um Anweisungen zum Durchführen eines Verfahrens für den RU-Zuweisung im WLAN nach einem der Ansprüche 10 bis 16 zu speichern, und einen mit dem Speicher kommunikativ gekoppelten Prozessor, der konfiguriert ist, um die im Speicher gespeicherten Anweisungen auszuführen, um das Verfahren für den R-TWT-Betrieb für latenzempfindlichen Datenverkehr im WLAN durchzuführen.

## Revendications

1. Procédé d'opération de temps de réveil cible restreint, R-TWT, pour un trafic sensible à la latence dans un réseau local sans fil, WLAN, le procédé comprenant :
l'envoi (102), par un premier point d'accès, AP, d'un dispositif à liaisons multiples, MLD, AP d'une première réponse à une première station, STA, d'un MLD non-AP afin de mapper tous les identifiants de trafic, TID, sur la totalité d'une pluralité de liaisons définies entre le MLD AP et le MLD non-AP par défaut ; dans lequel tous les TID incluent au moins un TID pour le trafic sensible à la latence et le MLD AP comprend une pluralité d'AP et le MLD non-AP comprend une pluralité de STA non-AP, et
l'envoi (104), par le premier AP, d'une réponse R-TWT à la première STA pour définir un accord R-TWT sur une quelconque ou plusieurs de la au moins une liaison sur laquelle le au moins un TID pour le trafic sensible à la latence a été mappé.

2. Procédé selon la revendication 1, comprenant en outre : la réception, par le premier AP, d'une première requête provenant de la première STA.

3. Procédé selon la revendication 2, dans lequel la réception de la première requête comprend : la réception, par le premier AP, d'une première requête d'association de liaisons multiples provenant de la première STA.

4. Procédé selon l'une quelconque des revendications 1 à 3, comprenant en outre : avant l'envoi de la réponse R-TWT à la première STA, la réception, par le premier AP, d'une requête R-TWT provenant de la première STA.

5. Procédé selon l'une quelconque des revendications 1 à 4, dans lequel la requête R-TWT et/ou la réponse R-TWT comprend un ou plusieurs éléments R-TWT qui sont définis pour indiquer si des accords R-TWT sont définis sur toutes les liaisons sur lesquelles le au moins un TID pour le trafic sensible à la latence a été mappé.

6. Procédé selon la revendication 5, dans lequel les éléments R-TWT comprennent un champ d'ensemble de paramètres R-TWT de diffusion qui est défini pour inclure un champ d'informations de trafic R-TWT.

7. Procédé selon la revendication 6, dans lequel le champ d'informations de trafic R-TWT comprend un sous-champ de commande d'informations de trafic, un bitmap TID DL R-TWT et un bitmap TID UL R-TWT ;
dans lequel les sous-champs de bitmap TID DL R-TWT sont définis pour indiquer quel(s) TID est/sont identifié(s) par les AP de planification TWT ou les STA planifiées TWT comme des flux de trafic sensibles à la latence dans la direction de liaison descendante sur les liaisons qui sont indiquées dans un sous-champ de bitmap ID liaison et le sous-champ de bitmap TID UL TWT restreint est configuré pour indiquer quel(s) TID est/sont identifié(s) par les AP de planification TWT ou les STA planifiées TWT comme des flux de trafic sensibles à la latence dans la direction de liaison montante sur les liaisons qui sont indiquées dans le sous-champ de bitmap ID liaison.

8. Procédé selon la revendication 7, dans lequel une valeur de 1 ou 0 à la position de bit k dans le bitmap TID UL ou DL est définie pour indiquer que le TID k est classé comme flux de trafic sensible à la latence.

9. Procédé selon l'une quelconque des revendications 1 à 8, comprenant en outre : la suppression, par le premier AP, d'un accord R-TWT défini sur une première liaison entre le premier AP et la première STA si aucun TID pour le trafic sensible à la latence n'est mappé sur la première liaison en raison de la mise à jour du mappage TID vers liaison.

10. Procédé d'opération de temps de réveil cible restreint, R-TWT, pour un trafic sensible à la latence dans un réseau local sans fil, WLAN, le procédé comprenant :
la réception (102), par une première station, STA, dans un dispositif à liaisons multiples non-point d'accès, MLD non-AP, d'une première réponse provenant d'un MLD AP afin de mapper tous les identifiants de trafic, TID, sur la totalité d'une pluralité de liaisons définies entre le MLD AP et le MLD non-AP, dans lequel tous les TID incluent au moins un TID pour le trafic sensible à la latence, le MLD AP comprend une pluralité d'AP et le MLD non-AP comprend une pluralité de STA non-AP, et
la réception (104), par la première STA, d'une réponse R-TWT pour définir un accord R-TWT sur une quelconque ou plusieurs de la au moins une liaison sur laquelle le au moins un TID pour le trafic sensible à la latence a été mappé.

11. Procédé selon la revendication 10, comprenant en outre : l'envoi, par la première STA, d'une première requête au premier AP.

12. Procédé selon la revendication 11, dans lequel l'envoi de la première requête comprend :
l'envoi, par la première STA, d'une première requête d'association de liaisons multiples au premier AP,
et la réception de la première réponse comprend :
la réception, par la première STA, d'une première réponse d'association de liaisons multiples provenant du premier AP pour définir une pluralité de liaisons entre les AP dans le MLD AP et les STA dans le MLD non-AP et mapper tous les TID sur la totalité de la pluralité de liaisons définies entre le MLD AP et le MLD non-AP par défaut, dans lequel tous les TID incluent le au moins un TID pour le trafic sensible à la latence.

13. Procédé selon la revendication 11, dans lequel l'envoi de la première requête comprend : l'envoi, par la première STA, d'une deuxième requête d'association de liaisons multiples provenant de la première STA et la réception de la première réponse comprend : la réception, par la première STA, d'une deuxième réponse d'association de liaisons multiples provenant du premier AP pour définir une pluralité de liaisons entre les AP dans le MLD AP et les STA dans le MLD non-AP et mapper au moins un TID pour le trafic sensible à la latence sur un sous-ensemble des liaisons définies entre le MLD AP et le MLD non-AP par le biais d'un processus de négociation avec le premier AP.

14. Procédé selon la revendication 13, comprenant en outre :
l'envoi, par la première STA, d'une requête de mappage TID vers liaison au premier AP ; et
la réception, par la première STA, d'une réponse de mappage TID vers liaison provenant du premier AP pour mapper au moins un TID pour le trafic sensible à la latence sur une liaison entre le MLD AP et le MLD non-AP sur lequel le au moins un TID pour le trafic sensible à la latence n'a pas été mappé.

15. Procédé selon l'une quelconque des revendications 10 à 14, comprenant en outre : avant la réception de la réponse R-TWT, l'envoi, par la première STA, d'une requête R-TWT au premier AP.

16. Procédé selon la revendication 15, dans lequel la requête R-TWT et/ou la réponse R-TWT comprend un élément R-TWT incluant un premier sous-champ et un deuxième sous-champ dans un champ de commande, dans lequel le premier sous-champ est défini pour indiquer si des informations incluses dans l'élément R-TWT sont destinées à la négociation de paramètres de R-TWT, et le deuxième sous-champ est défini pour indiquer si les informations incluses dans l'élément R-TWT sont appliquées à toutes les liaisons sur lesquelles le au moins un TID pour le trafic sensible à la latence a été mappé.

17. Point d'accès, AP (1000), pour une opération de temps de réveil cible restreint, R-TWT, pour un trafic sensible à la latence dans un WLAN, l'AP comprenant une mémoire pour stocker des instructions pour réaliser un procédé d'opération R-TWT pour le trafic sensible à la latence dans le WLAN selon l'une quelconque des revendications 1 à 9, et un processeur couplé de manière communicative à la mémoire, le processeur étant configuré pour exécuter les instructions stockées dans la mémoire pour réaliser le procédé d'opération R-TWT pour le trafic sensible à la latence dans le WLAN.

18. Station, STA (1100), pour une opération de temps de réveil cible restreint, R-TWT, pour un trafic sensible à la latence dans un WLAN, la STA comprenant une mémoire pour stocker des instructions pour réaliser un procédé d'attribution de RU dans le WLAN selon l'une quelconque des revendications 10 à 16, et un processeur couplé de manière communicative à la mémoire, le processeur étant configuré pour exécuter les instructions stockées dans la mémoire pour réaliser le procédé d'opération R-TWT pour le trafic sensible à la latence dans le WLAN.
